# EUROPÄISCHE PATENTSCHRIFT

(11) **EP 3 484 660 B1**
(45) Veröffentlichungstag und Bekanntmachung des Hinweises auf die Patenterteilung: **07.06.2023**
(21) Anmeldenummer: 16747748.8
(22) Anmeldetag: 15.07.2016
(51) Int. Cl.: F16P 1/02

(54) **SCHUTZABDECKUNG MIT EINEM EINKLICKBAREN STÜTZRAHMEN**
PROTECTIVE COVER HAVING A SUPPORTING FRAME THAT CAN BE SNAPPED IN
COUVERCLE PROTECTEUR COMPRENANT UN CADRE DE SUPPORT ENCLIQUETABLE

(43) Veröffentlichungstag der Anmeldung: 22.05.2019
(73) Patentinhaber: Arno Arnold GmbH, 63179 Obertshausen (DE)
(72) Erfinder: ROEHNERT, Maximilian, 61381 Friedrichsdorf (DE); MANG, Wolf-Matthias, 63179 Obertshausen (DE)
(74) Vertreter: advotec.
(86) Internationale Anmeldenummer: PCT/EP2016/066906
(87) Internationale Veröffentlichungsnummer: WO 2018/010813

(56) Entgegenhaltungen:
- DE-A1- 1 815 402
- DE-B4-102006 033 607
- DE-U1- 8 617 769
- DE-U1- 8 908 848
- DE-U1-202012 008 987

## Beschreibung

Die Erfindung betrifft eine Schutzabdeckung nach dem Oberbegriff des Anspruchs 1 (siehe z.B. DE 18 15 402 A1).

Aus dem Stand der Technik sind Schutzabdeckungen bereits bekannt und dienen insbesondere, jedoch keineswegs ausschließlich, der Abdeckung von beweglichen Maschinenteilen oder dergleichen. Derartige Schutzabdeckungen weisen in der Länge veränderliche Elemente auf, welche zum Schutz der Gleitbahnen von Werkzeugmaschinen mit einer über dem Faltenbalgen angeordneten ausziehbaren Abdeckung versehen sind, wobei die Abdeckung aus mindestens einem mit dem Balgen verbundenen Band besteht, das mindestens die obere Außenseite des Balgens bedeckt. Auf diese Weise werden die Maschinenteile sowohl im ein- als auch im ausgefahrenen Zustand nicht nur vor Fremdeinflüssen, wie beispielsweise Spänen, Staubpartikeln oder sonstigen Verschmutzungen, geschützt, sondern können zudem gegenüber der Umgebung abgedichtet werden. Beispielsweise sind die DE 18 15 402 A1, die DE 10 2006 033 607 B4 und die DE 20 2012 008 987 U1 zu nennen.

Die Elemente der Schutzabdeckung sind mit einem Stützrahmen verbunden, welcher der Stabilisierung dieser, insbesondere der Abstützung dieser, dient. Dabei umfasst der Stützrahmen in der Regel mehrere Rahmenelemente, welche in gleichmäßigem Abstand zueinander über die Länge der Elemente der Schutzabdeckung verteilt sind. Bei aus dem Stand der Technik bekannten Schutzabdeckungen sind derartige Stützrahmen lösbar, beispielsweise durch Verkleben, Vernieten und/oder Vernähen, mit den Schutzabdeckungselementen verbunden.

Bei den aus dem Stand der Technik bekannten Schutzabdeckungen hat es sich allerdings als nachteilig erwiesen, dass die Verbindung zwischen den Elementen und dem Stützrahmen nicht ohne Weiteres, insbesondere nicht im eingebauten Zustand, gelöst werden kann. In Normalfall werden die Elemente und der Stützrahmen durch ein aufwendiges Lösen der Klebverbindung, der Nietverbindung und/oder der Naht voneinander getrennt. Daher ist es, verständlicherweise, im Falle einer Beschädigung der Schutzabdeckung zwingend notwendig, die komplette Schutzabdeckung auszubauen und durch eine neue Schutzabdeckung zu ersetzen, um unnötige Standzeiten der zu schützenden Maschinenteile zu vermeiden. Dies ist selbst dann erforderlich, wenn eine Reparatur einzelner Bereiche der Schutzabdeckung an sich möglich und sinnvoll ist. Verständlicherweise erweist sich somit eine Wartung bzw. ein vollständiger Austausch als sehr kostspielig und arbeitsaufwendig.

Es besteht daher ein großer Bedarf an einer Schutzabdeckung, welche eine schnelle, zuverlässige und leichte Austauschbarkeit, Wartungs- und/oder Reparaturfähigkeit der einzelnen Bestandteile gewährleistet. Zudem sollte die Schutzabdeckung kostengünstig herstellbar, langlebig und individuell an den zu schützenden Bereich der Maschine anpassbar sein. Die Erfindung hat sich daher die Aufgabe gestellt, eine Schutzabdeckung bereitzustellen, um die oben genannten Schwierigkeiten zu überwinden und um vor allem die Wartungs- und/oder Reparaturbedingten Kosten und die dadurch bedingten Standzeiten der Maschine zu reduzieren.

Diese Aufgabe wird auf überraschend einfache, aber wirkungsvolle Weise durch eine Schutzabdeckung nach der Lehre des unabhängigen Hauptanspruchs 1 gelöst.

Erfindungsgemäß ist eine Schutzabdeckung mit mindestens einem in der Länge veränderlichen Schutzabdeckungselement und mit mindestens einem Rahmenelement vorgeschlagen, wobei das Rahmenelement mit dem Schutzabdeckungselement verbindbar ist. Dabei stützt das Rahmenelement das Schutzabdeckungselement zusätzlich ab. Die Schutzabdeckung ist dadurch gekennzeichnet, dass das Schutzabdeckungselement mindestens ein Haltemittel und das Rahmenelement im Bereich einer ersten Längskante (05a) mindestens ein Befestigungsmittel aufweist, wobei die Verbindung des Haltemittels mit dem Befestigungsmittel eine lösbare, insbesondere kraft- und/oder formschlüssige, und direkte Klickverbindung ist,

Die erfindungsgemäße Schutzabdeckung beruht auf dem Grundgedanken, dass eine Klickverbindung eine lösbare und direkte Verbindung mindestens zweier Komponenten, insbesondere des Haltemittels des Schutzabdeckungselementes und des Befestigungsmittels des Rahmenelementes, ist, deren Geometrien derart aufeinander abgestimmt sind, dass sie eine kraft- und/oder formschlüssige Verbindung eingehen, welche sich nicht durch erhöhten Krafteinsatz, Werkzeugeinsatz, Bewegung und/oder eine Kombination daraus wieder trennen lässt. Das heißt, dass die Geometrien des Haltemittels und des Befestigungsmittels derart aufeinander abgestimmt sind, dass sie sich bei Verbindung kraft- und/oder formschlüssig miteinander verhaken und/oder verkeilen.

Im Rahmen der Erfindung ist es erkannt worden, dass eine Klickverbindung eine einfache, schnelle, stabile und dauerhafte Verbindung des Schutzabdeckungselementes mit dem Rahmenelement gewährleistet, welche ihrerseits kejner zusätzlichen Sicherungsmittel, wie beispielsweise Schrauben und/oder Klammern und/oder dergleichen, bedarf. Dabei kann die Klickverbindung auch wieder gelöst werden.

Auf diese Weise ermöglicht die Klickverbindung einen einfachen, schnellen und reibungslosen Ein- und auch Ausbau, indem das Schutzabdeckungselement mit dem Rahmenelement allein durch den direkten Kontakt des Befestigungsmittels mit dem Haltemittel, beispielsweise durch ein Ineinanderschieben dieser, verbindbar bzw., beispielsweise durch ein Auseinanderschieben dieser, lösbar ist. Dies ermöglicht es im Fall einer Wartung und/oder Reparatur der Schutzabdeckung, dass lediglich die von der Wartung und/oder Reparatur betroffenen Teile der Schutzabdeckung durch Lösen der Verbindung voneinander getrennt und somit ausgetauscht und/oder instand gesetzt werden können. Ein zeit- und kostenaufwendiger Ausbau und/oder Ersatz der vollständigen Schutzabdeckung ist daher vermeidbar. Verständlicherweise können auf diese Weise nicht nur die Arbeits- und/oder Materialkosten, sondern auch die Ausfall- und/oder Reparaturzeit-bedingten Standzeiten der Maschine gering gehalten werden, so dass in erheblichem Maße Kosten eingespart werden können.

Vorteilhafte Weiterbildungen der Erfindung, welche einzeln oder in Kombination realisierbar sind, sind in den Unteransprüchen dargestellt.

In einer Ausgestaltung der vorliegenden Erfindung ist es denkbar, dass das Haltemittel eine längliche Öffnung ist und dass das Befestigungsmittel T-förmig mit einem Steg und zwei auskragenden T-Schenkeln ausgebildet ist. Zur Realisierung einer zuverlässigen und stabilen Verbindung des Schutzabdeckungselementes mit dem Rahmenelement ist es wichtig, dass die Geometrie der Öffnung der Geometrie des Befestigungsmittels folgt. Zudem ist es wichtig, dass die Breite der länglichen Öffnung der des Befestigungsmittels angepasst ist, damit sich das T-förmige Befestigungsmittel bei direktem Kontakt beider in der Öffnung verhakt und/oder verkeilt. Dabei ist es bevorzugt, dass die Breite der länglichen Öffnung größer ist als die Breite des Steges, aber kleiner ist als die Breite des Befestigungsmittels von einem T-Schenkel zum anderen T-Schenkel. Dabei ist das Befestigungsmittel mit dem Haltemittel durch Ineinanderschieben in einer bestimmten Stellung verbindbar bzw. durch Auseinan-derschieben von diesem lösbar. Für eine zuverlässige Verbindung ist es des Weiteren wichtig, dass die Höhe des Steges mindestens genauso hoch ist wie die Dicke des zu haltenden Schutzabdeckungselementes. Dabei ist die Herstellung eines Schutzabdeckungselementes mit einer länglichen Öffnung, sowie eines Rahmenelementes mit einem Befestigungsmittel nicht nur sehr kostengünstig, sondern auch sehr einfach und schnell mit vielen, aus dem Stand der Technik bekannten Materialien realisierbar. Das Rahmenelement und das Befestigungsmittel können dabei einteilig oder mehrteilig ausgestaltet sein, wobei diese im Fall einer mehrteiligen Ausgestaltung lösbar, beispielsweise durch Verkleben, Vernähen und/oder Vernieten, oder unlösbar, beispielsweise durch Verschweißen, verbunden sind. Im Rahmen der Erfindung ist dabei die Art der Verbindung von untergeordneter Bedeutung.

Die Ausbildung des T-förmigen Befestigungsmittels mit dem Steg und den zwei auskragenden T-Schenkeln bietet zudem den Vorteil, dass die Verbindung des Rahmenelementes mit dem Schutzabdeckungselement kraftübertragend ist. Des Weiteren ist das Befestigungsmittel sehr wirkungsvoll vor einem Verbiegen geschützt, so dass sich die Verbindung auch nicht bei Überbeanspruchung der Schutzabdeckung, insbesondere einer seitlichen Verschiebung dieser und/oder einer Überdehnung, löst.

In einer weiteren vorteilhaften Ausgestaltung der Erfindung ist es denkbar, dass die Schutzabdeckung mindestens zwei Rahmenelemente und mindestens eine band- oder streifenförmige Sperre aufweist, wobei die Sperre im Wesentlichen die gesamte Länge der Schutzabdeckung übergreifend im Bereich der ersten Längskanten der Rahmenelemente an diesen befestigt ist und wobei in gestrecktem Zustand der Schutzabdeckung die Länge der Sperre zwischen jeweils zwei benachbarten Rahmenelementen zumindest geringfügig kleiner ist als die maximale Länge des Schutzabdeckungselementes zwischen diesen Rahmenelementen. Auf diese Weise ist die Sperre direkt mit dem Schutzabdeckungselement und den Rahmenelementen verbunden. Beispielsweise, indem die Sperre im einfachsten Fall zwischen dem Schutzabdeckungselement und den Rahmenelementen angeordnet und durch die Klickverbindung mittels des in der Öffnung verhakten und/oder verkeilten Befestigungsmittels gehalten ist. Weiterhin beispielhaft weist die Sperre mindestens ein Haltemittel, insbesondere eine längliche Öffnung, auf, Das Haltemittel der Sperre ist dabei kongruent zu dem Haltemittel des Schutzabdeckungselementes ausgestaltet. Dabei verhakt und/oder verkeilt sich das Befestigungsmittel eines jeden Rahmenelementes gleichzeitig mit beiden Haltemitteln, wobei das Haltemittel des Schutzabdeckungselementes über dem Haltemittel der Sperre angeordnet ist. Diesbezüglich ist es wichtig, dass die Höhe des Steges mindestens genauso hoch ist wie die Dicke des zu haltenden Schutzabdeckungselementes und der zu haltenden Sperre.

Die Sperre begrenzt vorteilhafterweise die maximale Länge des Schutzabdeckungselementes in Richtung der Bewegung der Werkzeugmaschine, so dass die Sperre auf diese Weise ein übermäßiges Ausfahren der Schutzabdeckung verhindert bzw. eine maximale Ausfahrweite der Schutzabdeckung sicherstellt. Somit ist die Schutzabdeckung vor Überbeanspruchung, insbesondere einer Überdehnung, geschützt.

In einer alternativen vorteilhaften Ausgestaltung der Erfindung ist es denkbar, dass die Schutzabdeckung mindestens zwei Rahmenelemente und mindestens eine band- oder streifenförmige, im Wesentlichen die gesamte Länge der Schutzabdeckung übergreifende Sperre aufweist, wobei die Sperre mindestens ein Haltemittel, insbesondere eine längliche Öffnung, und die Rahmenelemente im Bereich der ersten Längskanten gegenüberliegenden zweiten Längskanten jeweils mindestens ein Befestigungsmittel aufweisen, wobei das Haltemittel mit den Befestigungsmitteln mittels einer lösbaren, insbesondere kraft- und/oder formschlüssigen, Klickverbindung verbindbar ist. Weiterhin ist in gestrecktem Zustand der Schutzabdeckung die Länge der Sperre zwischen jeweils zwei benachbarten Rahmenelementen zumindest geringfügig kleiner ist als die maximale Länge des Schutzabdeckungselementes zwischen diesen Rahmenelementen. Somit ist die Klickverbindung eine lösbare und direkte Verbindung mindestens zweier Komponenten, insbesondere des Haltemittels der Sperre und des Befestigungsmittels des Rahmenelementes. Dabei ist es wichtig, dass die Geometrien des Haltemittels und des Befestigungsmittels derart aufeinander abgestimmt sind, dass sie bei direktem Kontakt eine kraft- und/oder formschlüssige Verbindung eingehen, insbesondere sich miteinander verhaken und/oder verkeilen, so dass die Verbindung sich nicht durch erhöhten Krafteinsatz, Werkzeugeinsatz, Bewegung und/oder eine Kombination daraus wieder trennen lässt. Auf diese Weise ermöglicht die Klickverbindung einen einfachen, schnellen und reibungslosen Ein- und auch Ausbau, indem die Sperre mit dem Rahmenelement allein durch den direkten Kontakt des Befestigungsmittels mit den Haltemitteln, beispielsweise durch ein Ineinanderschieben dieser, verbindbar bzw., beispielsweise durch ein Auseinanderschieben dieser, lösbar ist. Dies ermöglicht es im Fall einer Wartung und/oder Reparatur der Schutzabdeckung, dass lediglich die von der Wartung und/oder Reparatur betroffenen Teile der Schutzabdeckung durch Lösen der Verbindung voneinander getrennt und somit ausgetauscht und/oder instand gesetzt werden können.

Im Rahmen der Erfindung ist es erkannt worden, dass die Sperre somit indirekt mit dem Schutzabdeckungselement und direkt mit den Rahmenelementen verbunden ist, wobei dabei die Haltemittel des Schutzabdeckungselementes und der Sperre bevorzugt kongruent zueinander ausgestaltet sind. Es ist daher bevorzugt, dass das Haltemittel des Schutzabdeckungselementes mit dem Befestigungsmittel der ersten Längskante des Rahmenelementes und das Haltemittel der Sperre mit dem Befestigungsmittel der zweiten Längskante desselben Rahmenelementes verbindbar, insbesondere miteinander verhakbar und/oder verkeilbar, ist. Weiterhin bevorzugt ist das Befestigungsmittel an der zweiten Längskante des Rahmenelementes T-förmig mit einem Steg und zwei auskragenden T-Schenkeln ausgebildet. Noch mehr bevorzugt sind die Befestigungsmittel der ersten und der zweiten Längskante des Rahmenelementes kongruent zueinander ausgestaltet.

Die Sperre begrenzt vorteilhafterweise die maximale Länge des Schutzabdeckungselementes in Richtung der Bewegung der Werkzeugmaschine, so dass die Sperre auf diese Weise ein übermäßiges Ausfahren der Schutzabdeckung verhindert bzw. eine maximale Ausfahrweite der Schutzabdeckung sicherstellt. Somit ist die Schutzabdeckung vor Überbeanspruchung, insbesondere einer Überdehnung, geschützt.

In einer Weiterbildung ist es denkbar, dass die Verbindung werkzeugfrei erfolgt, so dass ein schneller und reibungsloser Ein- und/oder Ausbau des Schutzabdeckungselementes, der Sperre und/oder der Rahmenelemente realisierbar ist.

Gemäß einer Ausgestaltung der Erfindung ist es denkbar, dass die Schutzabdeckung mindestens zwei Rahmenelemente aufweist, wobei die Rahmenelemente jeweils Teil eines, insbesondere metallischen, Schutzabdeckungssegments sind, wobei die Schutzabdeckungssegmente beim Verfahren der Schutzabdeckung einander teleskopisch hintergreifen. Diesbezüglich ist es denkbar, dass die Rahmenelemente mit den Schutzabdeckungssegmenten, wie beispielsweise Teleskopblechen, einteilig oder mehrteilig ausgestaltet sind, wobei diese im Fall einer mehrteiligen Ausgestaltung lösbar, beispielsweise durch Verkleben, Vernähen und/oder Vernieten, oder unlösbar, beispielsweise durch Verschweißen, verbunden sind. Im Rahmen der Erfindung ist dabei die Art der Verbindung von untergeordneter Bedeutung. Die Schutzabdeckungssegmente können zudem gelenkig gelagert oder unter fortwährendem Andruck mittels spezieller Befestigungsklammern starr mit der Schutzabdeckung verbunden sein. Bevorzugt sind die Schutzabdeckungssegmente aus einem Metall, insbesondere aus rostfreiem Stahl. Dabei bilden die Schutzabdeckungssegmente eine geschlossene Front. Zudem sind die Schutzabdeckungssegmente derart geformt, dass sie eine abstreifende Wirkung, insbesondere eine stark abstreifende Wirkung, erzielen. Dies bietet den Vorteil, dass die Schutzabdeckung nicht nur flüssigkeits und staubdicht ist, sondern auch starke Verschmutzungen abhält, wie beispielsweise heiße und/oder scharfkantige Späne. Daher sind die Maschine und/oder deren bewegliche Teile auch bei starken Verschmutzungen zuverlässig geschützt.

Zusammen mit der Verwendung einer Sperre ergeben sich verschiedene Vorteile. Einerseits besteht, je nach Ausführung einer teleskopartigen Schutzabdeckung, bei einer übermäßigen, ungewollten Längenänderung der Schutzabdeckung nicht nur die Möglichkeit, dass diese selbst beschädigt wird, sondern auch, dass dadurch die Maschine und/oder deren bewegliche Teile beschädigt werden. Dies ist beispielsweise der Fall, wenn sich durch eine übermäßige Längenänderung Lücken zwischen den Elementen der Schutzabdeckungssegmente bilden, durch die schadhafte Einflüsse an die beweglichen Teile der Maschine gelangen können. In diesem Fall ist es besonders vorteilhaft, dass die Sperre die Längenänderung der Schutzabdeckung begrenzt. Weiterhin sind teleskopische Schutzabdeckungen und/oder Schutzabdeckungssegmente sehr robust und zuverlässig.

Es ist des Weiteren denkbar, dass das Schutzabdeckungselement und/oder die Sperre im Wesentlichen aus einem faltbaren, insbesondere textilen und/oder eigensteifen, Kunststoffmaterial ist. Diese Materialien eignen sich einerseits aufgrund der weitreichenden Beherrschbarkeit der Materialeigenschaften, so dass das Schutzabdeckungselement und/oder die Sperre exakt an die benötigten Anforderungen der Schutzabdeckung anpassbar sind. So ist es beispielsweise vorgesehen, dass das Schutzabdeckungselement und/oder die Sperre aus einem festen, widerstandsfähigen Gewebe oder einer leichten Folie sind. Zudem sind die Materialien leicht verfügbar, kostengünstig und/oder leicht zu verarbeiten. Überdies eignen sich die genannten Materialien auch besonders gut zum Einsatz in der Nähe von und/oder an beweglichen Teilen von Werkzeugmaschinen, da diese langlebig und unempfindlich gegenüber den dort auftretenden Einflüssen sind. So führt, beispielsweise, ein Kontakt mit den Betriebsmitteln einer Werkzeugmaschine, wie Schmiermitteln, Spänen und dergleichen, nicht zu einer Verschlechterung der Materialeigenschaften und damit zu einer Gefährdung der Funktionalität und/oder einer frühzeitigen Materialermüdung des Schutzabdeckungselementes und/oder der Sperre.

Alternativ ist es denkbar, dass das Kunststoffmaterial ein thermoplastisches Kunststoffmaterial ist. Ein thermoplastisches Kunststoffmaterial ist ein Kunststoff, welcher sich in einem bestimmten Temperaturbereich reversibel verformen lässt. Zudem ist ein thermoplastischer Kunststoff schweißbar. Zu den bevorzugten thermoplastischen Kunstoffen gehören beispielsweise, jedoch nicht ausschließlich, Acrylnitril-Butadien-Styrol (ABS), Polyamide (PA), Polylactat (PLA), Polymethylmethacrylat (PMMA), Polycarbonat (PC), Polyethylenterephthalat (PET), Polyethylen (PE), Polypropylen (PP), Polystyrol (PS), Polyetheretherketon (PEEK) und Polyvinylchlorid (PVC),

In einer weiteren vorteilhaften Ausgestaltung der Erfindung ist es denkbar, dass das Rahmenelement aus einem eigensteifen Kunststoffmaterial ist, so dass das Rahmenelement das Schutzabdeckungselement bestmöglich abstützt. Eigensteife Kunststoffmaterialen sind einem Fachmann bekannt und eignen sich aufgrund ihrer weitreichend beherrschbaren Materialeigenschaften besonders gut zum Einsatz in der Nähe von und/oder an beweglichen Teilen von Werkzeugmaschinen, da diese langlebig und unempfindlich gegenüber den dort auftretenden Einflüssen sind und beispielsweise eine frühzeitige Materialermüdung der Rahmenelemente verhindern. Zudem sind diese Materialien leicht verfügbar, kostengünstig und/oder leicht zu verarbeiten.

In einer Weiterbildung der Erfindung ist es denkbar, dass das Rahmenelement mindestens zwei Schutzabdeckungselemente miteinander verbindet. Das heißt, dass das Rahmenelement mindestens zwei voneinander beabstandete Befestigungsmittel aufweist, welche jeweils mit dem Haltemittel unterschiedlicher Schutzabdeckungselemente verbindbar sind, Auf diese Weise werden größere Dimensionen der Schutzabdeckung ermöglicht. Des Weiteren ermöglicht die Ausgestaltung im Wartungs- und/oder Reparaturfall den Austausch einzelner Teilbereiche der Schutzabdeckung.

Alternativ ist es denkbar, dass die Schutzabdeckungselemente winklig zueinander versetzt angeordnet sind, um beispielsweise Schutzabdeckungen über Eck zu realisieren.

Es wird davon ausgegangen, dass die Definitionen und Ausführungen der oben genannten Begriffe für alle in dieser Beschreibung im Folgenden beschriebenen Aspekte gelten, sofern nichts anderes angegeben ist.

Weitere Einzelheiten, Merkmale und Vorteile der Erfindung ergeben sich aus der nachfolgenden Beschreibung der bevorzugten Ausführungsbeispiele in Verbindung mit den Unteransprüchen. Hierbei können die jeweiligen Merkmale für sich alleine oder zu mehreren in Kombination miteinander verwirklicht sein. Die Erfindung ist nicht auf die Ausführungsbeispiele beschränkt, Die Ausführungsbeispiele sind in den Figuren schematisch dargestellt. Gleiche Bezugsziffern in den einzelnen Figuren bezeichnen dabei gleiche oder funktionsgleiche bzw. hinsichtlich ihrer Funktion einander entsprechende Elemente.

Im Einzelnen zeigen:
- **Fig. 1**: eine isometrische Darstellung eines Schutzabdeckungselementes (Fig. 1A), eines Rahmenelementes (Fig. 1B) und eines in das Schutzabdeckungselement geklickten Rahmenelementes (Fig. 1C);
- **Fig. 2**: eine isometrische Darstellung einer erfindungsgemäßen Schutzabdeckung;
- **Fig. 3**: eine isometrische Darstellung eines erfindungsgemäßen Schutzabdeckungssegmentes;
- **Fig. 4**: eine isometrische Darstellung eines erfindungsgemäßen Schutzabdeckungssegmentes mit eingeklicktem Schutzabdeckungselement und eingeklickter Sperre;
- **Fig. 5**: eine isometrische Darstellung eines erfindungsgemäßen Schutzabdeckungssegmentes mit eingeklicktem Schutzabdeckungselement und eingeklickter Sperre im Detail; und
- **Fig. 6**: eine isometrische Darstellung einer erfindungsgemäßen Schutzabdeckung mit Schutzabdeckungssegmenten,

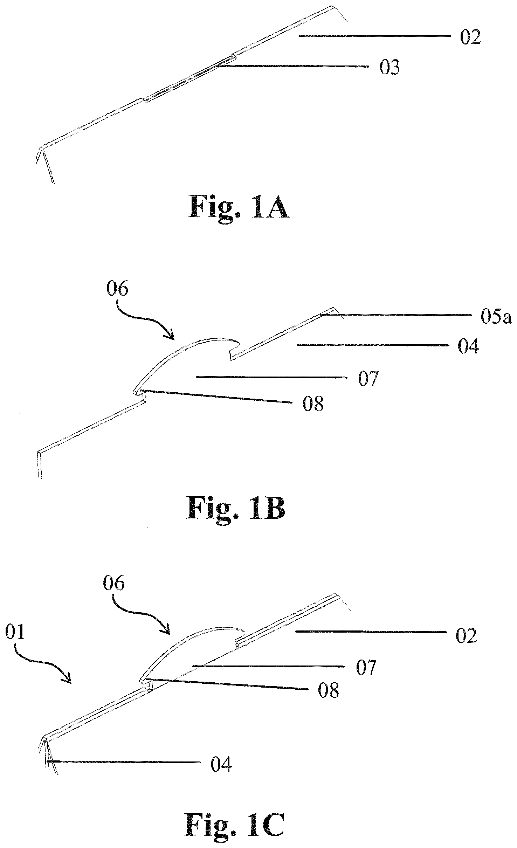

In der **Fig. 1** sind isometrische Darstellungen eines Schutzabdeckungselementes (02; Fig. 1A), eines Rahmenelementes (04; Fig. 1B) und eines in das Schutzabdeckungselement (02) geklickten Rahmenelementes (04; Fig. 1C) dargestellt.

In Fig. 1A ist eine Detailansicht des Schutzabdeckungselementes (02) gezeigt, welches ein Haltemittel (03) aufweist, das als längliche Öffnung ausgebildet ist.

In Fig. 1B ist eine Detailansicht des Rahmenelementes (04) gezeigt, welches im Bereich einer ersten Längskante (05a) ein Befestigungsmittel (06) aufweist. Das Befestigungsmittel (06) ist T-förmig mit einem Steg (07) und zwei auskragenden T-Schenkeln (08) ausgebildet. Aufgrund der T-förmigen Ausgestaltung ist das Befestigungsmittel (06) sehr wirkungsvoll vor einem Verbiegen geschützt,

Fig. 1C zeigt eine Detailansicht der erfindungsgemäßen Schutzabdeckung (01), in welcher das Schutzabdeckungselement (02) mit dem Rahmenelement (04) mittels einer Klickverbindung verbunden ist, bei welcher die Geometrien des Haltemittels des Schutzabdeckungselementes (02) und des Befestigungsmittels (06) des Rahmenelementes (04) derart aufeinander abgestimmt sind, dass sie eine kraft- und/oder formschlüssige Verbindung eingehen, welche sich nicht durch erhöhten Krafteinsatz, Werkzeugeinsatz, Bewegung und/oder eine Kombination daraus wieder trennen lässt. Dabei verhaken und/oder verkeilen sich das Haltemittel und das Befestigungsmittel (06) derart, dass sie eine stabile und dauerhafte Verbindung eingehen, welche ihrerseits keiner zusätzlichen Sicherungsmittel, wie beispielsweise Schrauben und/oder Klammern und/oder dergleichen, bedarf.

Wie der Fig. 1C deutlich zu entnehmen ist, ist das Haltemittel des Schutzabdeckungselementes (02) als eine längliche Öffnung ausgebildet. Das Befestigungsmittel (06) des Rahmenelementes (04) ist T-förmig mit einem Steg (07) und zwei auskragenden T-Schenkeln (08) ausgebildet, Dabei ist die Breite der länglichen Öffnung größer als die Breite des Steges (07), aber kleiner als die Breite des Befestigungsmittels (06) von einem T-Schenkel zum anderen T-Schenkel (08). Auf diese Weise bildet sich eine zuverlässige Verbindung aus.

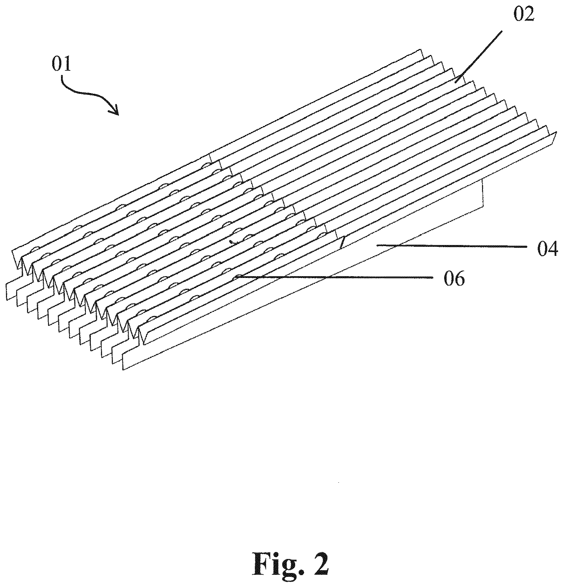

In der **Fig. 2** ist eine isometrische Darstellung einer erfindungsgemäßen Schutzabdeckung (01), beispielsweise in der Art eines Faltenbalges, gezeigt, bei welcher Rahmenelemente (04) in jeder Falte eines Schutzabdeckungselementes (02) angeordnet und mit diesen mittels in direkten Kontakt gebrachten Haltemitteln und Befestigunsmitteln (06) verbunden sind, welche sich bei direktem Kontakt derart verhaken, dass die Rahmenelemente (04) zuverlässig und dauerhaft mit dem Schutzabdeckungselement (02) verbunden sind. Dabei sind die Befestigungsmittel (06) der Rahmenelemente (04) einfach und schnell in die Haltemittel der Schutzabdeckungselemente (02) klickbar.

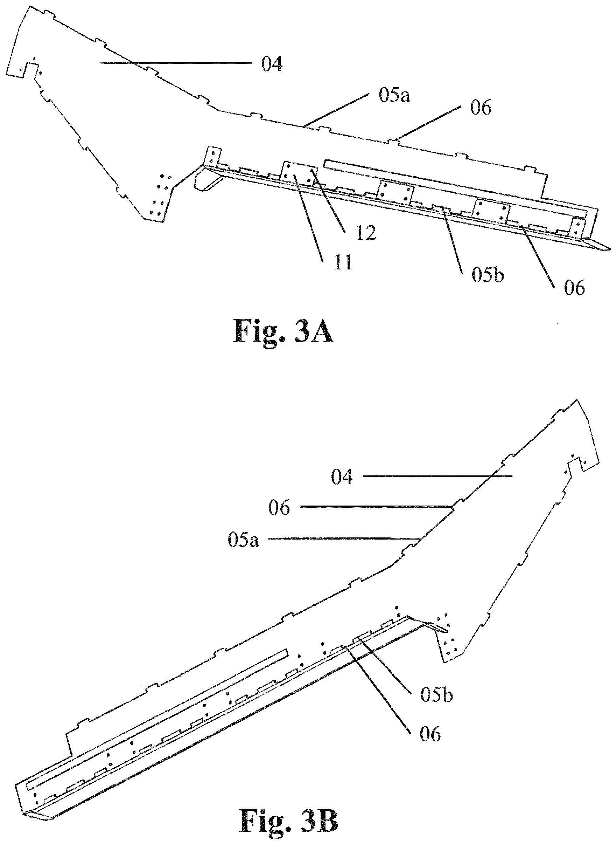

In **Fig. 3**, **Fig. 4** und **Fig. 5** sind isometrische Darstellungen eines bevorzugten Schutzabdeckungssegmentes (11), welches mit einem Rahmenelement (04) verbunden ist, von beiden Seiten gezeigt, Dabei ist es in den Fig. 3A, 4A und 5A deutlich zu erkennen, dass das Rahmenelement (04) und das Schutzabdeckungssegment (11) mehrteilig ausgestaltet sind. Für deren Verbindung, insbesondere eine Nietverbindung, liegen Nietbohrungen (12) vor.

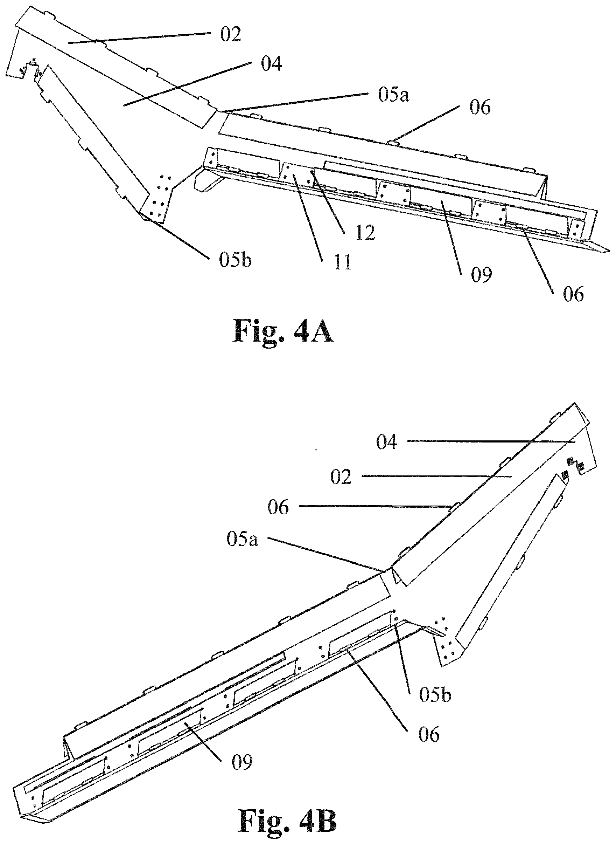

In den Fig. 3A, 3B und den Fig. 4A und 4B ist es zudem deutlich zu erkennen, dass das Rahmenelement (04) im Bereich einer ersten Längskante (05a) und einer der ersten Längskante (05a) gegenüberliegenden zweiten Längskante (05b) mehrere Befestigungsmittel (06) aufweist, welche kongruent zueinander ausgestaltet sind.

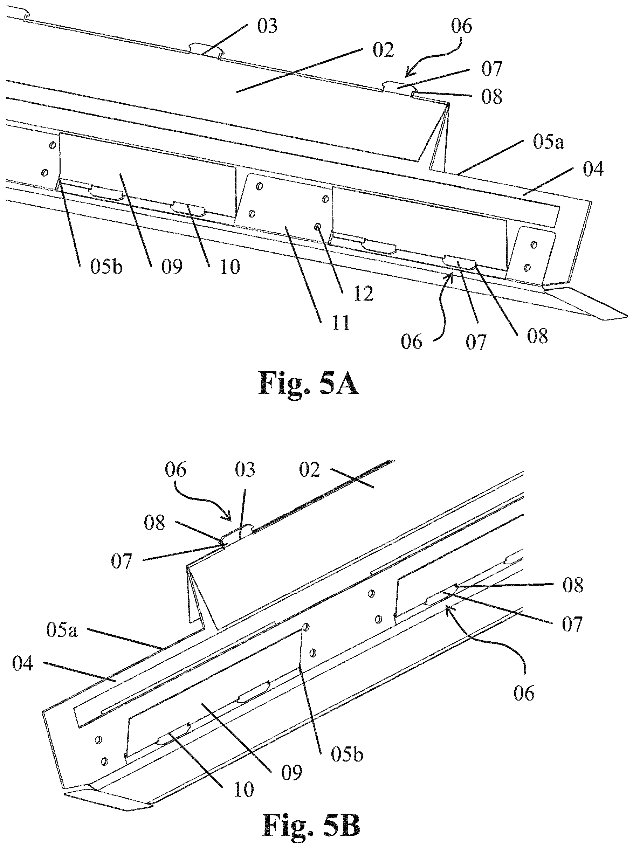

In den Fig. 4A, 4B und den Fig. 5A und 5B ist es deutlich zu erkennen, dass ein Schutzabdeckungselement (02) mit dem Rahmenelement (04) verbunden ist, indem die Befestigungsmittel (06) des Rahmenelementes (04), welche im Bereich von dessen erster Längskante (05a) angeordnet sind, in die Haltemittel (03) des Schutzabdeckungselementes (02) geklickt sind. Zudem ist eine band- oder streifenförmige Sperre (09) mit dem Rahmenelement (04) verbunden, welche zunächst durch die entsprechenden Öffnungen des Rahmenelementes (04) gefädelt wird. Anschließend werden die Befestigungsmittel (06) des Rahmenelementes (04), welche im Bereich von dessen zweiter Längskante (05b) angeordnet sind, in die Haltemittel (10) der Sperre (09) geklickt. Dabei sind die Befestigungsmittel (06), wie deutlich in Fig. 5A und 5B zu erkennen ist, T-förmig mit einem Steg (07) und zwei auskragenden T-Schenkeln (08) ausgebildet. Zudem sind die Befestigungsmittel (06) der ersten (05a) und der zweiten Längskante (05b) des Rahmenelementes (04) kongruent zueinander ausgestaltet, ebenso wie die Haltemittel (03, 10) des Schutzabdeckungselementes (02) und der Sperre (09).

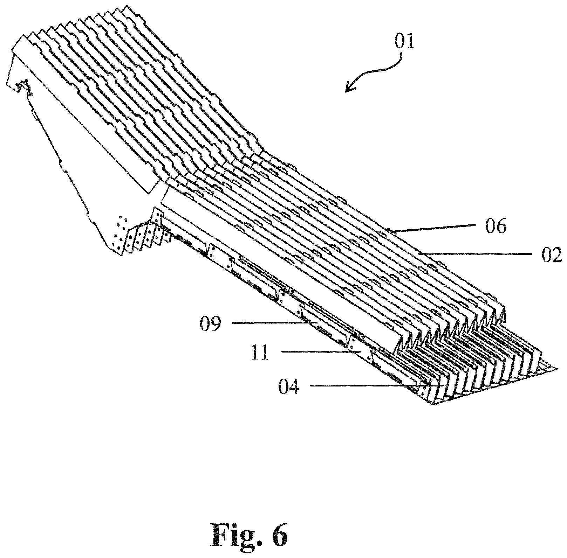

In **Fig. 6** ist eine isometrische Darstellung einer erfindungsgemäßen Schutzabdeckung (01) mit mehreren Schutzabdeckungssegmenten (11) als fertig montierte Dachgruppe gezeigt, beispielsweise in der Art eines Faltenbalges. Dabei sind die Rahmenelemente (04) Teil eines, insbeson-dere metallischen, Schutzabdeckungssegmentes (11) und in jeder Falte eines Schutzabdeckungselementes (02) angeordnet. Die Rahmenelemente (04) sind mit den Falten des Schutzabdeckungselementes (02) verbunden, indem die Befestigungsmittel (06) der ersten Längskante des Rahmenelementes (04) in die Haltemittel des Schutzabdeckungselementes (02) geklickt sind. Zudem ist eine band- oder streifenförmige Sperre (09) mit dem Rahmenelement (04) verbunden, indem die Befestigungsmittel (06) des Rahmenelementes (04), welche im Bereich von dessen zweiter Längskante angeordnet sind, in die Haltemittel der Sperre (09) geklickt sind. Dadurch sind die Haltemittel und die Befestigungsmittel (06) in direkten Kontakt gebracht und somit miteinander verbunden.

## Patentansprüche

1. Schutzabdeckung (01) mit mindestens einem in der Länge veränderlichen Schutzabdeckungselement (02) und mit einem Rahmenelement (04), wobei das Rahmenelement (04) mit dem Schutzabdeckungselement (02) verbindbar ist und wobei das Schutzabdeckungselement (02) im Wesentlichen aus einem faltbaren Kunststoffmaterial ist, **dadurch gekennzeichnet,**
**dass** das Schutzabdeckungselement (02) mindestens ein Haltemittel (03) und das Rahmenelement (04) im Bereich einer ersten Längskante (05a) mindestens ein Befestigungsmittel (06) aufweist, wobei die Verbindung des Haltemittels (03) mit dem Befestigungsmittel (06) eine lösbare, insbesondere kraft- und/oder formschlüssige, und direkte Klickverbindung ist.

2. Schutzabdeckung (01) nach Anspruch 1,
**dadurch gekennzeichnet,**
**dass** das Haltemittel (03) eine längliche Öffnung ist und dass das Befestigungsmittel (06) T-förmig mit einem Steg (07) und zwei auskragenden T-Schenkeln (08) ausgebildet ist.

3. Schutzabdeckung (01) nach einem der vorhergehenden Ansprüche,
**dadurch gekennzeichnet,**
**dass** die Schutzabdeckung (01) mindestens zwei Rahmenelemente (04) und mindestens eine band- oder streifenförmige Sperre (09) aufweist, wobei die Sperre (09) im Wesentlichen die gesamte Länge der Schutzabdeckung (01) übergreifend im Bereich der ersten Längskanten (05a) der Rahmenelemente (04) an diesen befestigt ist und wobei in gestrecktem Zustand der Schutzabdeckung (01) die Länge der Sperre (09) zwischen jeweils zwei benachbarten Rahmenelementen (04) zumindest geringfügig kleiner ist als die maximale Länge des Schutzabdeckungselementes (02) zwischen diesen Rahmenelementen (04).

4. Schutzabdeckung (01) nach Anspruch 1 oder 2,
**dadurch gekennzeichnet,**
**dass** die Schutzabdeckung (01) mindestens zwei Rahmenelemente (04) und mindestens eine band- oder streifenförmige, im Wesentlichen die gesamte Länge der Schutzabdeckung (01) übergreifende, Sperre (09) aufweist, wobei die Sperre (09) mindestens ein Haltemittel (10), insbesondere eine längliche Öffnung, und die Rahmenelemente (04) im Bereich der ersten Längskanten (05a) gegenüberliegenden zweiten Längskanten (05b) jeweils mindestens ein Befestigungsmittel (06) aufweisen, wobei das Haltemittel (10) mit den Befestigungsmitteln (06) mittels einer lösbaren, insbesondere kraft- und/oder formschlüssigen, Klickverbindung verbindbar ist und wobei in gestrecktem Zustand der Schutzabdeckung (01) die Länge der Sperre (09) zwischen jeweils zwei benachbarten Rahmenelementen (04) zumindest geringfügig kleiner ist als die maximale Länge des Schutzabdeckungselementes (02) zwischen diesen Rahmenelementen (04).

5. Schutzabdeckung (01) nach einem der vorhergehenden Ansprüche, **dadurch gekennzeichnet,**
**dass** die Verbindung werkzeugfrei erfolgt.

6. Schutzabdeckung (01) nach einem der vorhergehenden Ansprüche, **dadurch gekennzeichnet,**
**dass** die Schutzabdeckung (01) mindestens zwei Rahmenelemente (04) aufweist, wobei die Rahmenelemente (04) jeweils Teil eines, insbesondere metallischen, Schutzabdeckungssegments (11) sind, wobei die Schutzabdeckungssegmente (11) beim Verfahren der Schutzabdeckung (01) einander teleskopisch hintergreifen.

7. Schutzabdeckung (01) nach einem der vorhergehenden Ansprüche, **dadurch gekennzeichnet,**
**dass** das Schutzabdeckungselement (02) im Wesentlichen aus einem textilen und/oder eigensteifen Kunststoffmaterial und/oder die Sperre (09) im Wesentlichen aus einem faltbaren, insbesondere textilen und/oder eigensteifen, Kunststoffmaterial ist.

8. Schutzabdeckung (01) nach Anspruch 1 oder 7,
**dadurch gekennzeichnet,**
**dass** das Kunststoffmaterial ein thermoplastisches Kunststoffmaterial ist.

9. Schutzabdeckung (01) nach einem der vorhergehenden Ansprüche, **dadurch gekennzeichnet,**
**dass** das Rahmenelement (04) aus einem eigensteifen Kunststoffmaterial ist.

10. Schutzabdeckung (01) nach einem der vorhergehenden Ansprüche, **dadurch gekennzeichnet,**
**dass** das Rahmenelement (04) mindestens zwei Schutzabdeckungselemente (02) miteinander verbindet.

11. Schutzabdeckung (01) nach Anspruch 10,
**dadurch gekennzeichnet,**
**dass** die Schutzabdeckungselemente (02) winklig zueinander versetzt angeordnet sind.

## Claims

1. A protective cover (01) comprising at least one protective cover element (02) variable in length and comprising a frame element (04), the frame element (04) being capable of being connected to the protective cover element (02) and the protective cover element (02) being essentially made of a foldable plastic material, **characterised in that**
the protective cover element (02) comprises at least one holding means (03) and the frame element (04) comprises at least one fastening means (06) in the area of a first longitudinal edge (05a), the connection between the holding means (03) and the fastening means (06) being a detachable, in particular force-fitting and/or interlocking, and direct snap connection.

2. The protective cover (01) according to claim 1,
**characterised in that**
the holding means (03) is an oblong opening and **in that** the fastening means (06) is realised in the shape of a T having a crosspiece (07) and two projecting T-legs (08).

3. The protective cover (01) according to any one of the preceding claims,
**characterised in that**
the protective cover (01) comprises at least two frame elements (04) and at least one ribbon-shaped or strip-shaped barrier (09), said barrier (09) being fastened to the first longitudinal edges (05a) of the frame elements (04) in the area of said first longitudinal edges (05a) of the frame elements (04) by essentially overlapping the entire length of the protective cover (01), the length of the barrier (09) between every two adjacent frame elements (04) being at least slightly smaller than the maximal length of the protective cover element (02) between said frame elements (04) when the protective cover (01) is extended.

4. The protective cover (01) according to claim 1 or 2,
**characterised in that**
the protective cover (01) comprises at least two frame elements (04) and at least one ribbon-shaped or strip-shaped barrier (09) which essentially overlaps the entire length of the protective cover (01), said barrier (09) comprising at least one holding means (10), in particular an oblong opening, and said frame elements (04) each comprising at least one fastening means (06) in the area of second longitudinal edges (05b) opposite the first longitudinal edges (05a), said holding means (10) being capable of being connected to the fastening means (06) by means of a detachable, in particular force-fitting and/or interlocking, snap connection, and the length of the barrier (09) between every two adjacent frame elements (04) being at least slightly smaller than the maximal length of the protective cover element (02) between said frame elements (04) when the protective cover (01) is extended.

5. The protective cover (01) according to any one of the preceding claims,
**characterised in that**
the connection can be carried out without using tools.

6. The protective cover (01) according to any one of the preceding claims,
**characterised in that**
the protective cover (01) has at least two frame elements (04), said frame elements (04) each constituting part of a, in particular metal, protective cover segment (11), said protective cover segments (11) each engaging behind one another telescopically when the protective cover (01) is being extended.

7. The protective cover (01) according to any one of the preceding claims,
**characterised in that**
the protective cover element (02) is essentially made of a textile and/or inherently rigid plastic material and/or the barrier (09) is essentially made of a foldable, in particular textile and/or inherently rigid, plastic material.

8. The protective cover (01) according to claim 1 or 7,
**characterised in that**
the plastic material is a thermoplastic material.

9. The protective cover (01) according to any one of the preceding claims,
**characterised in that**
the frame element (04) is made of an inherently rigid plastic material.

10. The protective cover (01) according to any one of the preceding claims,
**characterised in that**
the frame element (04) connects at least two protective cover elements (02) to each other.

11. The protective cover (01) according to claim 10,
**characterised in that**
the protective cover elements (02) are disposed at an angled offset to each other.

## Revendications

1. Couvercle de protection (01) comprenant au moins un élément (02) de couvercle de protection variable en longueur et comprenant un élément de cadre (04), ledit élément de cadre (04) pouvant être relié avec l'élément (02) de couvercle de protection et ledit élément (02) de couvercle de protection étant essentiellement fait en matériau plastique pliable,
**caractérisé en ce que**
l'élément (02) de couvercle de protection comprend au moins un moyen de retenue (03) et l'élément de cadre (04) comprend au moins un moyen de fixation (06) dans la zone d'un premier bord longitudinal (05a), la connexion entre le moyen de retenue (03) et le moyen de fixation (06) étant une connexion enclipsée détachable, notamment par adhérence et/ou par complémentarité de forme, et directe.

2. Couvercle de protection (01) selon la revendication 1,
**caractérisé en ce que**
le moyen de retenue (03) est une ouverture oblongue et **en ce que** le moyen de fixation (06) est réalisé en forme de T ayant une traverse (07) et deux jambes de T (08) saillantes.

3. Couvercle de protection (01) selon l'une quelconque des revendications précédentes,
**caractérisé en ce que**
le couvercle de protection (01) comprend au moins deux éléments de cadre (04) et au moins un blocage (09) en forme de ruban ou de bande, ledit blocage (09) étant fixé aux premiers bords longitudinaux (05a) des éléments de cadre (04) dans la zone desdits premiers bords longitudinaux (05a) des éléments de cadre (04) en chevauchant essentiellement la longueur entière du couvercle de protection (01), la longueur du blocage (09) entre deux éléments de cadre (04) adjacents à chaque fois étant au moins légèrement plus petite que la longueur maximale de l'élément (02) de couvercle de protection entre lesdits éléments de cadre (04) quand le couvercle de protection (01) est étendu.

4. Couvercle de protection (01) selon la revendication 1 ou la revendication 2,
**caractérisé en ce que**
le couvercle de protection (01) comprend au moins deux éléments de cadre (04) et au moins un blocage (09) qui est en forme de ruban ou de bande et qui chevauche essentiellement la longueur entière du couvercle de protection (01), ledit blocage (09) comprenant au moins un moyen de retenue (10), notamment une ouverture oblongue, et lesdits éléments de cadre (04) chacun comprenant au moins un moyen de fixation (06) dans la zone de deuxièmes bords longitudinaux (05b) en face des premiers bords longitudinaux (05a), ledit moyen de retenue (10) pouvant être relié avec les moyens de fixation (06) à l'aide d'une connexion enclipsée détachable, notamment par adhérence et/ou par complémentarité de forme, et la longueur du blocage (09) entre deux éléments de cadre (04) adjacents à chaque fois étant au moins légèrement plus petite que la longueur maximale de l'élément (02) de couvercle de protection entre lesdits éléments de cadre (04) quand le couvercle de protection (01) est étendu.

5. Couvercle de protection (01) selon l'une quelconque des revendications précédentes,
**caractérisé en ce que**
la connexion peut être réalisée sans outil.

6. Couvercle de protection (01) selon l'une quelconque des revendications précédentes,
**caractérisé en ce que**
le couvercle de protection (01) a au moins deux éléments de cadre (04), lesdits éléments de cadre (04) chacun faisant partie d'un segment (11) de couvercle de protection, notamment fait en métal, lesdits segments (11) de couvercle de protection chacun s'engageant l'un derrière l'autre de manière télescopique quand le couvercle de protection (01) est en train d'être étendu.

7. Couvercle de protection (01) selon l'une quelconque des revendications précédentes,
**caractérisé en ce que**
l'élément (02) de couvercle de protection est essentiellement fait en matériau textile et/ou plastique intrinsèquement rigide et/ou le blocage (09) est essentiellement fait en matériau plastique pliable, notamment textile et/ou intrinsèquement rigide.

8. Couvercle de protection (01) selon la revendication 1 ou la revendication 7,
**caractérisé en ce que**
le matériau plastique est un matériau thermoplastique.

9. Couvercle de protection (01) selon l'une quelconque des revendications précédentes,
**caractérisé en ce que**
l'élément de cadre (04) est fait en matériau plastique intrinsèquement rigide.

10. Couvercle de protection (01) selon l'une quelconque des revendications précédentes,
**caractérisé en ce que**
l'élément de cadre (04) relie au moins deux éléments (02) de couvercle de protection l'un avec l'autre.

11. Couvercle de protection (01) selon la revendication 10, **caractérisé en ce que**
les éléments (02) de couvercle de protection sont disposés de manière angulairement décalée l'un à l'autre.
